Europäisches Patentamt

**European Patent Office**

Office européen des brevets

(19)

(11) Veröffentlichungsnummer: **0 073 738**
**A1**

(12) # EUROPÄISCHE PATENTANMELDUNG

(21) Anmeldenummer: **82810349.9**

(22) Anmeldetag: **24.08.82**

(51) Int. Cl.³: **G 06 F 3/04**, G 05 B 19/417

(30) Priorität: **24.08.81 CH 5440/81**

(43) Veröffentlichungstag der Anmeldung: **09.03.83**
**Patentblatt 83/10**

(84) Benannte Vertragsstaaten: **AT BE DE FR GB IT LU NL SE**

(71) Anmelder: **Hans Haussener AG,**
**CH-3148 Lanzenhäusern (CH)**

(72) Erfinder: **Kappeler, Anton, Schwarzenburgstrasse 1023,**
**CH-3147 Mittelhäusern (CH)**

(74) Vertreter: **Schweizer, Hans et al, Bovard & Cie**
**Patentanwälte VSP Optingenstrasse 16,**
**CH-3000 Bern 25 (CH)**

(54) **Einrichtung zum automatischen Steuern einer Maschine.**

(57) Die Einrichtung umfasst einen Datenbus (2), der einen Mikroprozessor (1), einen Arbeitsspeicher (5), einen Programmspeicher (6), eine Eingangsschnittstelle (3), eine Ausgangsschnittstelle (4) und eine Überwachungsschaltung (7) miteinander verbindet. Die beiden genannten Schnittstellen besitzen eine begrenzte Anzahl Eingänge (10) bzw. Ausgänge (11). Zum Schaffen der Möglichkeit, die Anzahl der genannten Eingänge und Ausgänge zu vergrössern, ist der Datenbus (2) über eine Bus-Schnittstelle (8) mit einem Vielfachstecker (12) verbunden. An den genannten Vielfachstecker wird eine Erweiterungsvorrichtung (13) angeschlossen, die einen Datenbus (14) aufweist, der eine Dekodierschaltung (18), eine Eingangsschnittstelle (16) und eine Ausgangsschnittstelle (17) miteinander verbindet. Die beiden Schnittstellen der Erweiterungsvorrichtung arbeiten über die zwei genannten Datenbus (2, 14) mit dem Arbeits- und Systemspeicher sowie dem Mikroprozessor zusammen, wobei dieselbe Systemsoftware benützt wird. Es ist lediglich notwendig, das im Programmspeicher gespeicherte Programm mit den zusätzlichen Funktionen, welche über die Schnittstellen der Erweiterungsvorrichtung gesteuert werden, zu ergänzen. Die Erweiterungsvorrichtung besitzt einen zusätzlichen Vielfachstecker (19), an welchen noch weitere Erweiterungsvorrichtungen angeschlossen werden können.

ACTORUM AG

0073738

# EINRICHTUNG ZUM AUTOMATISCHEN STEUERN EINER MASCHINE

Die Erfindung betrifft eine steckbare Einrichtung gemäss dem Oberbegriff des Patentanspruches 1.

Zur automatischen Steuerung von Arbeitsabläufen bei Maschinen werden bekannte Einrichtungen, die einen Mikroprozessor aufweisen, verwendet. Solche Einrichtungen werden beispielsweise durch die Firma Sodeco Saia in Murten (Schweiz) hergestellt und unter der Typenbezeichnung PCA 1 auf den Markt gebracht. Diese bekannte Einrichtung besitzt eine begrenzte Anzahl, z.B. sechs, Eingänge zum Eingeben von von der zu steuernden Maschine gelieferten Eingangssignalen und eine begrenzte Anzahl, z.B. sechs, Ausgänge zum Abgeben von Ausgangssignalen zum Steuern der Arbeitsabläufe der genannten Maschine. Diese bekannte Einrichtung eignet sich sehr gut zum Steuern von einfachen Maschinen. Werden jedoch zum Steuern einer erweiterten oder komplizierteren Maschine zusätzliche Eingänge und Ausgänge notwendig, werden entweder zwei oder mehr der oben genannten Einrichtungen, wobei jede dieser zusätzlichen Einrichtungen je einen eigenen Mikroprozessor aufweist, obwohl einer ausreichen würde, oder eine wesentlich aufwendigere und teurere Einrichtung benötigt. Es ist Aufgabe der Erfindung, eine Einrichtung der eingangs genannten Art zu schaffen, welche gestattet, die Anzahl der Eingänge und der Ausgänge auf eine einfache und kostensparende Weise zu vergrössern.

Die erfindungsgemässe Einrichtung ist durch die im kennzeichnenden Teil des Patentanspruches 1 angeführten Merkmale gekennzeichnet.

Weitere Ausbildungsformen der erfindungsgemässen Einrichtungen sind in den abhängigen Patentansprüchen angeführt.

Der Erfindungsgegenstand ist nachstehend mit Bezugnahme auf die Zeichnung beispielsweise näher erläutert. Es zeigen

Fig. 1 das Blockschema einer Ausführungsform der erfindungsgemässen Einrichtung zum Steuern einer Maschine,

Fig. 2 das Blockschema einer Erweiterungsvorrichtung, mit welcher die Anzahl der Eingänge und Ausgänge der Einrichtung gemäss der Fig. 1 vergrössert werden kann, und

Fig. 3 die stark vereinfacht dargestellten Gehäuse der Einrichtung gemäss der Fig. 1, von zwei Erweiterungsvorrichtungen gemäss der Fig. 2 und einer Bedienungsvorrichtung, welche Einrichtung bzw. Vorrichtungen über Verbindungskabel miteinander verbunden sind.

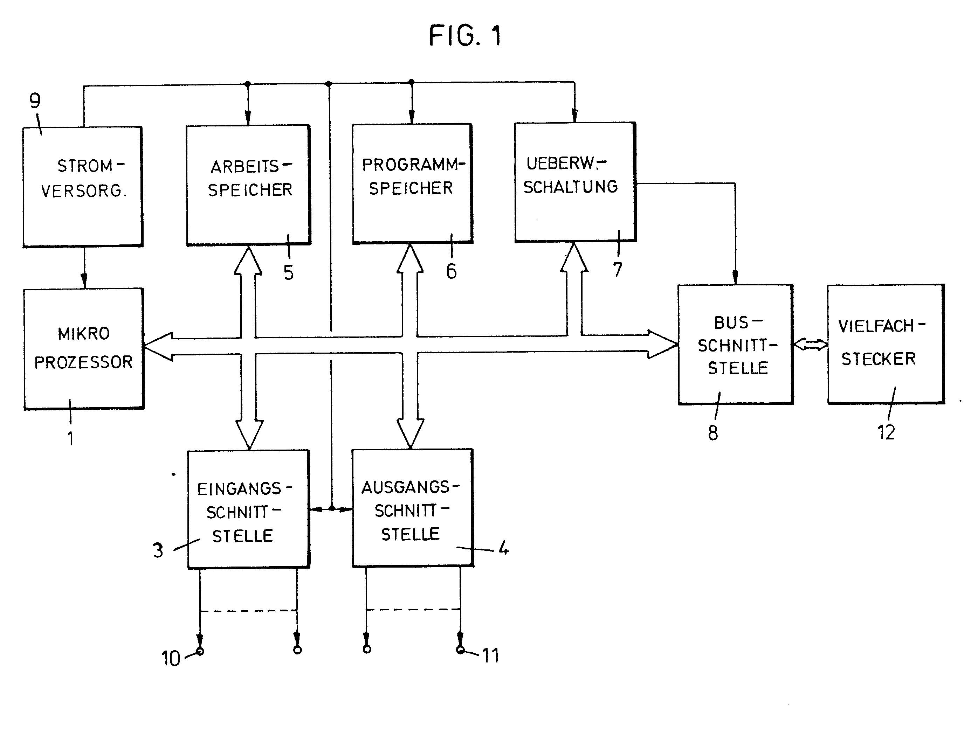

Die Fig. 1 zeigt das Blockschema eines Ausführungsbeispieles der erfindungsgemässen Einrichtung zum automatischen Steuern der Arbeitsabläufe einer Maschine, beispielsweise einer Verpackungsmaschine. Diese Einrichtung besitzt eine zentrale Recheneinheit in der Form eines Mikroprozessors 1, z.B. vom Typ MC 6802 oder MC 6809 (Motorola). Der Mikroprozessor 1 ist über einen Datenbus 2 mit einer Eingangsschnittstelle 3, einer Ausgangsschnittstelle 4, einem Arbeitsspeicher 5, einem Programmspeicher 6, einer Ueberwachungsschaltung 7 und einer Bus-Schnittstelle 8 verbunden. Eine an das Wechselstromnetz anschliessbare Stromversorgung 9 liefert nur die zum Betrieb des Mikroprozessors 1, der Schnittstellen 3 und 4, der Speicher 5 und 6 und der Ueberwachungsschaltung 7 notwendigen Spannungen bzw. Ströme. Die Stromversorgung 9 umfasst dem Fachmann auf diesem Gebiet bekannte, nicht dargestellte Komponenten, wie einen Transformator, einen oder mehrere Gleichrichter und einen oder mehrere Spannungsregler. Die Stromversorgung 9 ist nicht dazu vorgesehen, noch weitere Verbraucher zu speisen, und kann deshalb sehr kompakt auf engstem Raum untergebracht werden.

Ein für einen speziellen Anwendungsfall, z.B. für die Steuerung der nicht dargestellten Verpackungsmaschine, ausgearbeitetes Programm wird in den Programmspeicher 6 eingegeben. Als Programmspeicher wird vorzugsweise ein Lesespeicher (ROM) benützt. Die Programmierung des Programmspeichers 6 kann entweder mit einer Maske beim Hersteller oder mit einem speziellen Programmiergerät durch den Anwender selbst erfolgen. Der Programmiervorgang selbst ist irreversibel. Jedoch können nicht programmierte Bits ohne weiteres nachträglich belegt werden. Auf diese Weise ist es möglich das Programm zu einem späteren Zeitpunkt zu ergänzen.

Der Arbeitsspeicher 5 ist ein Schreib/Lesespeicher (RAM). Erst zusammen mit dem Programmspeicher 6 und dem Arbeitsspeicher 5 bildet der Mikroprozessor 1 ein arbeitsfähiges System, wobei die Systemsoftware Zähler, Zeitgeber, usw. beinhaltet, die softwaremässig realisiert sind. Die Systemsoftware steuert die Eingangsschnittstelle 3 und die Ausgangsschnittstelle 4. Die Schnittstellen 3 und 4 weisen sechs Eingänge zum Zuführen von der zu steuernden Maschine abgegebenen Eingangssignalen bzw. sechs Ausgänge auf zum Abgeben von Ausgangssignalen, die zur Steuerung der Maschine dienen.

Die Ueberwachungsschaltung 7 enthält eine durch Hardware festgelegte Funktion, die darin besteht, das System auf die Funktionstüchtigkeit zu überwachen und bei Funktionsausfall diesen Zustand anzuzeigen und die Einrichtung abzuschalten.

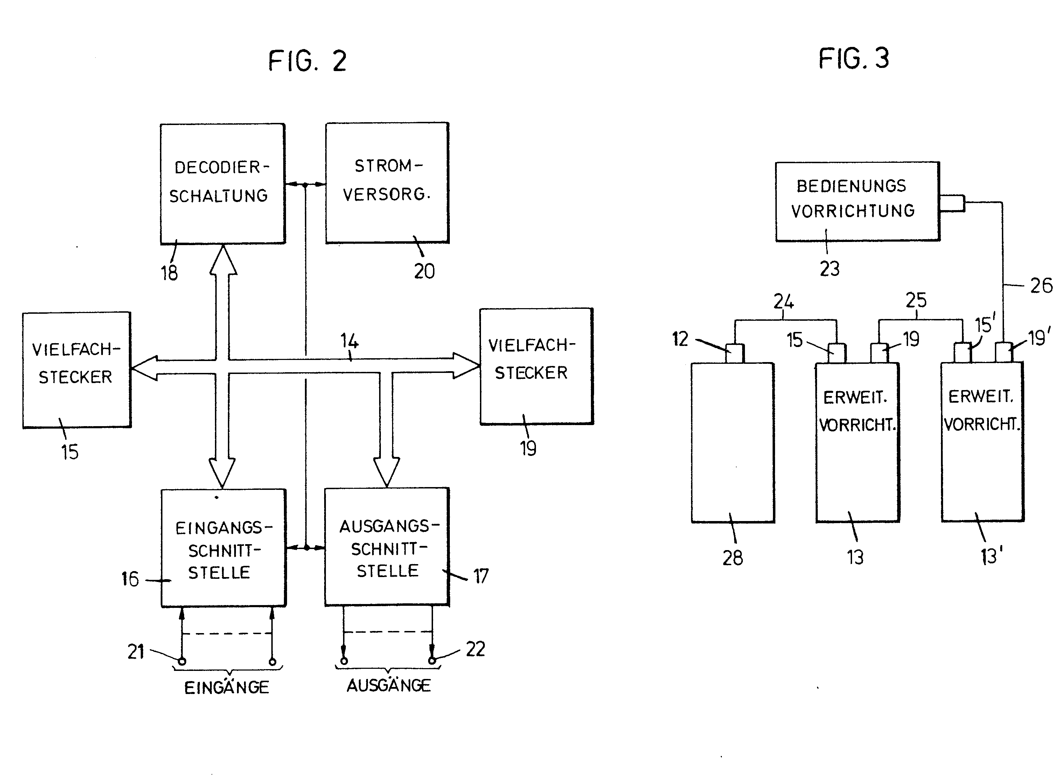

Zum erfindungsgemässen problemlosen Vergrössern der Anzahl der Eingänge und Ausgänge ist der Datenbus 2 an die Bus-Schnittstelle 8 angeschlossen, die ihrerseits mit einem Vielfachstecker 12 verbunden ist. Dadurch wird es möglich, den Datenbus 2 bei Bedarf in eine Erweiterungvorrichtung 13 (siehe Fig. 3) zu verlängern. In der Fig. 2 ist das Blockschema der Erweiterungsvorrichtung 13 dargestellt.

Die Erweiterungsvorrichtung besitzt einen Datenbus 14, an den ein erster Vielfachstecker 15, eine Eingangsschnittstelle 16, eine Ausgangsschnittstelle 17, eine Dekodierschaltung 18 und ein zweiter Vielfachstecker 19 angeschlossen ist. Die zum Betrieb der beiden Schnittstellen 16 und 17 sowie der Dekodierschaltung 18 notwendigen Spannungen und Ströme werden von einer Stromversorgung 20 geliefert, welche die Energie ihrerseits vom Wechselstromnetz bezieht. Die Stromversorgung 20 ist ähnlich aufgebaut wie die Stromversorgung 9 der vorangehend beschriebenen Einrichtung und ist nur zum Speisen der Dekodierschaltung 18 und der beiden Schnittstellen 16 und 17 bestimmt und kann daher vergleichsweise in einem kleinen Raumanteil der Vorrichtung 13 untergebracht werden.

Die Eingangsschnittstelle 16 der Erweiterungsvorrichtung 13 ist ähnlich wie die Eingangsschnittstelle 3 der vorangehend beschriebenen Einrichtung aufgebaut und kann beispielsweise ebenfalls sechs Eingänge 21 aufweisen. Die Ausgangsschnittstelle 17 der Erweiterungsvorrichtung 13 ist ähnlich wie die Ausgangsschnittstelle 4 der oben beschriebenen Einrichtung aufgebaut und kann beispielsweise ebenfalls sechs Ausgänge 22 aufweisen. Ueber den zweiten Vielfachstecker 19 kann beispielsweise eine Bedienungsvorrichtung 23 oder eine weitere praktisch identische Erweiterungsvorrichtung 13' (siehe Fig. 3) angeschlossen werden, falls die Anzahl der Eingänge bzw. Ausgänge weiter vermehrt werden sollen.

Der Erweiterungsvorrichtung 13 und gegebenenfalls jeder zusätzlichen Erweiterungsvorrichtung 13' ist je eine eigene Adresse zugeordnet, damit der Mikroprozessor 1 die verschiedenen Erweiterungsvorrichtungen voneinander unterscheiden kann. Die Zuteilung der genannten Adresse zu den von der zugehörigen Eingangsschnittstelle 16 gesendeten Nachrichten oder das Erkennen der Adresse für eine für die betreffende Ausgangsschnittstelle bestimmte Nachricht erfolgt durch die Dekodierschaltung 18.

Die Fig. 3 zeigt in stark vereinfachter Darstellungsweise ein Gehäuse 28, in dem die mit Bezug auf die Fig. 1 beschriebene Einrichtung enthalten ist, zwei Erweiterungsvorrichtungen 13 und 13' und die Bedienungsvorrichtung 23. Der Verbindungsstecker 12 der im Gehäuse 28 unterbrachten Einrichtung ist über ein mehradriges Verbindungskabel 24 mit dem ersten Vielfachstecker 15 der Erweiterungsvorrichtung 13, der zweite Vielfachstecker 19 der Erweiterungsvorrichtung 13 ist über ein mehradriges Verbindungskabel 25 mit dem ersten Vielfachstecker 15' der Erweiterungsvorrichtung 13' und der zweite Vielfachstecker 19' der Erweiterungsvorrichtung 13' ist über ein Verbindungskabel 26 mit der Bedienungsvorrichtung 23 verbunden. Selbstverständlich kann die Zahl der Erweiterungsvorrichtungen noch erhöht werden, indem noch weitere Erweiterungsvorrichtungen angefügt werden. Die Anzahl von verwendeten Erweiterungsvorrichtungen ist begrenzt durch die Speicherkapazität des Arbeitsspeichers 5 und/oder Programmspeichers 6 in der Einrichtung gemäss der Fig. 1. Die Bus-Schnittstelle 8 stellt die Verbindung zwischen dem direkt mit dem Mikroprozessor 1 verbundenen Datenbus 2 und dem Datenbus 14 der Erweiterungsvorrichtung 13 her und kann gleichzeitig die auf dem Datenbus 2 auftretenden Signale verstärken, so dass die vom Mikroprozessor 1 ausgegebenen Signale unabhängig von der Anzahl der angeschlossenen Erweiterungsvorrichtungen möglichst wenig belastet wer-

0073738

den. Ueber den Datenbus 2 werden bidirektional Adressen, Daten und Befehle übertragen. Ueber den Datenbus 14 der Erweiterungsvorrichtung 13 werden noch zusätzliche Steuersignale, die von der Ueberwachungsschaltung 7 ausgegeben und über Leitungen 27 an die Bus-Schnittstelle 8 weitergeleitet werden, übertragen.

Die Eingänge 10 und 21 der Eingangsschnittstellen 3 bzw. 16 und die Ausgänge 11 und 22 der Ausgangsschnittstellen 4 bzw. 17 sind vorzugsweise nicht galvanisch mit dem Datenbus 2 bzw. 4 verbunden und sind gegenüber diesem so isoliert, dass an die Eingänge und Ausgänge Wechselspannungen bis zu 220 Volt angelegt werden können. Derartige galvanische Trennungen können mit Hilfe von Relais oder Optokopplern erreicht werden.

Zum automatischen Steuern der weiter oben genannten Verpackungsmaschine reicht beispielsweise die in der Fig. 1 dargestellte Einrichtung mit ihren sechs Eingängen 10 und sechs Ausgängen 11 aus. In diesem Fall wird der Vielfachstecker 12 direkt mit der Bedienungsvorrichtung 23 verbunden. Mit der Bedienungsvorrichtung 23 wird die Verpackungsmaschine ein- bzw. ausgeschaltet und zusätzlich können zu Kontrollzwecken Testabläufe eingeleitet werden.

Wird beispielsweise die oben genannte Verpackungsmaschine nachträglich mit einer automatischen Ettikettiervorrichtung ausgerüstet, so wird für die Steuerung dieser Ettiketiervorrichtung die Erweiterungsvorrichtung 13 an die Einrichtung gemäss der Fig. 1 angeschlossen, um zusätzliche Ein- bzw. Ausgänge zu schaffen. Weil der Datenbus 14 der Erweiterungsvorrichtung 13 an den Datenbus 2 der Einrichtung angeschlossen wird, ist es nicht notwendig, dass die Systemsoftware erweitert wird. Die Systemsoftware steuert alle Eingänge und Ausgänge sowohl jene der Einrichtung gemäss der Fig. 1 als auch jene der an sie angeschlossenen Erweiterungsvorrichtung 13. Es ist lediglich notwendig, das im Programmspeicher 6 gespeicherte Programm entsprechend denjenigen Funktionen zu erweitern, welche Funktionen die Ettiketiervorrichtung ausführen soll. Wenn beispielsweise eine Maschine so konzipiert ist, dass nachträglich vorgegebene Erweiterungen möglich sind und/oder bestimmte Zusatzvorrichtungen hinzugefügt werden können, kann dies bei der ersten Programmierung berücksichtigt werden und im voraus ein entsprechendes erweitertes Programm im Programmspeicher 6 gespeichert werden. In diesem Fall genügt es dann lediglich, je nach Bedarf eine oder mehrere Erweiterungsvorrichtungen 13 an die Einrichtung gemäss der Fig. 1 anzuschliessen, wozu kein Fachmann auf dem Gebiet der Elektronik benötigt wird.

Die oben beschriebene Einrichtung zum Steuern einer Maschine und die Erweiterungsvorrichtung weisen die Vorteile auf, dass zum Steuern einer sich im Erstausbau befindlichen Maschine lediglich die relativ billige Einrichtung genügt und dass bei einer Erweiterung oder Ergänzung der Maschine es lediglich notwendig ist, je nach Bedarf eine oder mehrere Erweiterungsvorrichtungen hinzuzufügen, welche in der Anschaffung noch billiger sind als die Einrichtung.

Die oben beschriebene Einrichtung und die Erweiterungsvorrichtung sind zum Erleichtern der Unterhaltsarbeiten vorzugsweise in normierten Gehäusen mit standardisierten Apparatesteckern untergebracht, wobei die Stromzuführung für die Stromversorgungen 9 und 20 sowie die Ein- und Ausgänge über die Apparatestecker mit der Installation verbunden werden.

0073738

<u>PATENTANSPRUECHE</u>

1. Steckbare Einrichtung zum automatischen Steuern einer Maschine oder Anlage, mit einem in einem Gehäuse angeordneten Datenbus (2), der einen Mikroprozessor (1), einen Arbeitsspeicher (5), einen Programmspeicher (6), eine Eingangsschnittstelle (3) mit einer begrenzten Anzahl Eingängen für Eingangssignale, einer Ausgangsschnittstelle (4) mit einer begrenzten Anzahl Ausgängen für Ausgangssignale und eine Ueberwachungsschaltung (7) miteinander verbindet, wobei die Steuerung der Maschine bzw. Anlage in Abhängigkeit von den der Eingangsschnittstelle zugeführten Eingangssignalen erfolgt, das Gehäuse über einen Apparatestecker auf einen Sockel aufsteckbar ist und zum Vergrössern der Anzahl der genannten Eingänge und Ausgänge eine Bus-Schnittstelle (8) vorhanden ist, dadurch gekennzeichnet, dass die Bus-Schnittstelle mit dem Datenbus (2) und über Steuerleitungen (27) mit der Ueberwachungsschaltung (7) verbunden ist, und dass ein an die Bus-Schnittstelle angeschlossener Vielfachstecker (12) zum Anschliessen einer Erweiterungsvorrichtung oder einer Bedienungsvorrichtung vorhanden ist und dass die Anschlüsse für die Energieversorgung der Einrichtung und die genannten Eingänge (10) und Ausgänge (11) an den Apparatestecker angeschlossen sind.

2. Einrichtung nach Anspruch 1, dadurch gekennzeichnet, dass im Gehäuse eine an das Wechselstromnetz anschliessbare Stromversorgung (9) untergebracht ist, und dass die Stromversorgung so dimensioniert ist, dass sie nur die für den Betrieb des Mikroprozessors, der beiden Speicher, der beiden Schnittstellen und der Ueberwachungsschaltung notwendige Energie liefert.

- 2 -

0073738

3. Einrichtung nach Anspruch 1 oder 2 mit mindestens einer steckbaren Erweiterungsvorrichtung zum Vergrössern der Anzahl der genannten Eingänge und Ausgänge, dadurch gekennzeichnet, dass die Erweiterungsvorrichtung (13) wenigstens einen Vielfachstecker (15), eine Eingangsschnittstelle (16) für Eingangssignale, eine Ausgangsschnittstelle (17) für Ausgangssignale, eine Dekodierschaltung (18) und einen Datenbus (14) aufweist, und dass der Datenbus mit dem Vielfachstecker, den genannten Schnittstellen und der Dekodierschaltung verbunden ist.

4. Einrichtung nach Anspruch 3, dadurch gekennzeichnet, dass die Erweiterungsvorrichtung eine eigene an das Wechselstromnetz anschliessbare Stromversorgung (20) zum Liefern der zum Betrieb der Dekodierschaltung und der beiden Schnittstellen der Erweiterungsvorrichtung notwendigen Energie aufweist.

5. Einrichtung nach Anspruch 3, dadurch gekennzeichnet, dass die Erweiterungsvorrichtung einen zweiten Vielfachstecker (19) zum Anschliessen einer weiteren Erweiterungsvorrichtung (13') oder einer Bedienungsvorrichtung (23) aufweist, und dass der zweite Vielfachstecker mit dem Datenbus (14) der Erweiterungsvorrichtung verbunden ist.

6. Einrichtung nach Anspruch 1, 2, 3, 4 oder 5, dadurch gekennzeichnet, dass die Ausgänge und Eingänge zumindest einer der Schnittstellen vom zugehörigen Datenbus (2; 14) galvanisch getrennt sind.

7. Einrichtung nach Anspruch 6, dadurch gekennzeichnet, dass Optokoppler oder Relais zur galvanischen Trennung der Ausgänge und Eingänge vom zugehörigen Datenbus vorhanden sind.

# FIG. 1

0073738

## FIG. 2

```
┌──────────────┐      ┌──────────────┐
│  DECODIER-   │◄────►│   STROM-     │
│  SCHALTUNG   │      │  VERSORG.    │
└──────────────┘      └──────────────┘
      18                    20

┌──────────┐                          ┌──────────┐
│ VIELFACH-│◄──────────14──────────►  │ VIELFACH-│
│ STECKER  │                          │ STECKER  │
└──────────┘                          └──────────┘
     15                                    19

┌──────────────┐      ┌──────────────┐
│  EINGANGS-   │◄────►│  AUSGANGS-   │
│  SCHNITT-    │      │  SCHNITT-    │
│  STELLE      │      │  STELLE      │
└──────────────┘      └──────────────┘
  16                           17

       21                    22
     EINGÄNGE            AUSGÄNGE
```

## FIG. 3

```
        ┌──────────────────┐
        │   BEDIENUNGS     │──┐
        │   VORRICHTUNG    │  │
        └──────────────────┘  │
                23            │ 26
        24            25      │
   12        15    19   15'  19'
  ┌──────┐ ┌──────┐ ┌──────────┐
  │      │ │ERWEIT.│ │ERWEIT.   │
  │      │ │VORRICHT.│VORRICHT. │
  └──────┘ └──────┘ └──────────┘
    28       13        13'
```

2/2

0073738

Europäisches
Patentamt

**EUROPÄISCHER RECHERCHENBERICHT**

0073738

Nummer der Anmeldung

EP 82 81 0349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 06 F 3/04 |
| Y | US-A-4 144 565 (I.B.M.)<br>* Spalte 2, Zeilen 63-68; Spalte 3, Zeilen 1-31; Spalte 4, Zeilen 42-50; Spalte 7, Zeilen 18-48, 61-68; Spalte 8, Zeile 1; Spalte 10, Zeilen 7-26, 35-40; Figuren 1,2,4,5 * & DE - A - 2 758 023 | 1-4 | G 05 B 19/417 |
| | --- | | |
| Y | US-A-4 264 954 (NCR)<br>* Spalte 1, Zeilen 9-14, 58-68; Spalte 2, Zeilen 45-68; Spalte 3, Zeilen 1-57; Figuren 1-5 * | 1,2,4 | |
| | --- | | |
| Y | ELETRONIQUE & APPLICATIONS INDUSTRIELLES, Nr. 234, 4. Januar 1977, Seiten 49-51, Paris, FR.<br>LILEN: "Le 1er microprocesseur CDI bipolaire 16 bits sur une puce" * Seite 50, Figur 3; Seite 51, Zeilen 45-47 * | 1 | |
| | | | RECHERCHIERTE SACHGEBIETE (Int. Cl. ³) |
| | --- | | |
| Y | ENGINEERING, Band 219, Nr. 4, April 1979, Seiten I-VIII, London, G.B.<br>ISAACSON et al.: "Interfacing microprocessors" * Seite I, Spalte 3, Zeilen 24-36; Figur 1 auf Seite II; Seite VII, Spalte 3, Zeilen 31-62; Figur 12 und Seite VIII * | 1,6,7 | G 06 F 3/04<br>G 05 B 19/417<br>G 06 F 15/06 |
| | ---    -/- | | |

Der vorliegende Recherchenbericht wurde für alle Patentansprüche erstellt.

| Recherchenort<br>DEN HAAG | Abschlußdatum der Recherche<br>26-11-1982 | Prüfer<br>DHEERE R.F.B.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 124 887 (JOHNSON) <br> * Spalte 2, Zeilen 19-34; Spalte 3, Zeilen 3-29, 50-55; Figur 1 * <br><br> - - - | 1,3,5 | |
| Y | AUTOMATISME, Band 21, Nr. 1/2, Januar/Februar 1976, Seiten 32-38, FR. <br> SULPICE et al.: "Système de commande et d'acquisition numérique décentralisé" * Seite 33, Seite 34, Spalte 1, Spalte 2, Zeilen 1-5 * <br><br> - - - - - | 1,5 | |

**RECHERCHIERTE SACHGEBIETE (Int. Cl. ³)**

Der vorliegende Recherchenbericht wurde für alle Patentansprüche erstellt.

| Recherchenort | Abschlußdatum der Recherche | Prüfer |
|---|---|---|
| DEN HAAG | 26-11-1982 | DHEERE R.F.B.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82